# EUROPÄISCHE PATENTSCHRIFT

(11) **EP 1 329 380 B1**
(45) Veröffentlichungstag und Bekanntmachung des Hinweises auf die Patenterteilung: **25.02.2004**
(21) Anmeldenummer: 02025826.5
(22) Anmeldetag: 18.11.2002
(51) Int. Cl.: B64D 13/06

(54) **Klimatisierungssystem**
Air-conditioning system
Système de climatisation

(30) Priorität: 16.01.2002 DE 10201426
(43) Veröffentlichungstag der Anmeldung: 23.07.2003
(73) Patentinhaber: Liebherr-Aerospace Lindenberg GmbH, 88161 Lindenberg/Allgäu (DE)
(72) Erfinder: Brutschert, Norbert, 88161 Lindenberg (DE); Haas, Joachim, 88239 Wangen (DE)
(74) Vertreter: Zinnecker, Armin, Dipl.-Ing.

(56) Entgegenhaltungen:
- US-A- 5 511 385
- US-A- 5 704 218
- PATENT ABSTRACTS OF JAPAN vol. 002, no. 060 (M-018), 28. April 1978 (1978-04-28) & JP 53 022300 A (SHIMADZU CORP), 1. März 1978 (1978-03-01)

## Beschreibung

Die vorliegende Erfindung betrifft ein Klimatisierungssystem, insbesondere für Flugzeuge, mit wenigstens einem in einem Stauluftkanal angeordneten Wärmetauscher zur Kühlung von Druckluft durch ein Fluid sowie mit wenigstens einer ersten und zweiten Welleneinrichtung, die mit dem Wärmetauscher druckluftseitig in Verbindung stehen.

Derartige Klimatisierungssysteme dienen der Klimatisierung, d.h. dem Heizen und Kühlen der Kabine, der Kabinenbedruckung sowie der Frischluftversorgung. Insbesondere im Flugzeugbau ist es von besonderer Bedeutung, dass das Klimatisierungssystem über eine möglichst geringe Baugröße und Gewicht verfügt. Darüber hinaus ist wesentlich, dass die genannten Funktionen des Klimatisierungssystems sowohl im Normalbetrieb als auch bei teilweisem Ausfall der Anlage erfüllt werden (Redundanz).

Aus dem Stand der Technik sind hierzu zwei unterschiedliche Konzepte bekannt, die im folgenden dargestellt werden:

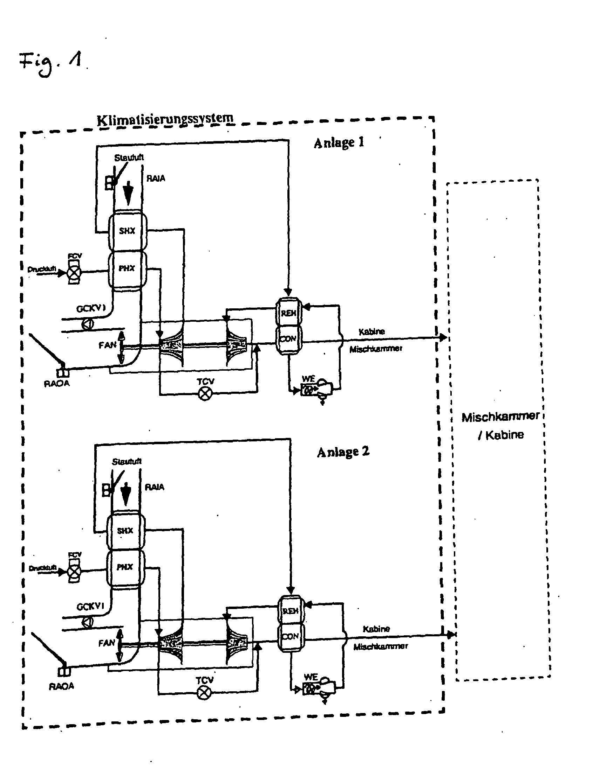

Figur 1 zeigt eine erste Ausführungsform gemäß dem Stand der Technik, bei der zwei meist identische autarke Anlagen benutzt werden, um die erforderlichen Funktionen zu erfüllen. Das System gemäß Figur 1 gewährleistet, dass auch bei einem Totalausfall einer Anlage die zweite Anlage die Mindestanforderungen noch erfüllt. Eingangsseitig wird jede der Anlagen mit heißer Druckluft (z. B. 200°C und 3 bar) von den Triebwerken oder einem Hilfaggregat beaufschlagt. Die Luftmenge wird durch das Durchsatzregelventil FCV geregelt. Die Druckluft strömt zunächst durch den Vor- oder Primärwärmetauscher PHX und wird darin auf ca. 100°C vorgekühlt. In dem nachgeschalteten Verdichter C wird die Luft weiter verdichtet und anschließend durch den Haupt- oder Sekundärwärmetauscher SHX auf ca. 40°C gekühlt. Die Luft strömt anschließend durch den Wasserabscheidekreislauf bestehend aus den Komponenten Reheater REH, Kondensor CON und Wasserabscheider WE. Die auf diese Weise entfeuchtete Luft strömt anschließend durch die Turbine T, wird darin entspannt und dabei bis auf ca. -30°C abgekühlt. Vom Turbinenauslass strömt die Luft durch die kalte Seite des Kondensors CON und anschließend in eine Mischkammer bzw. in die Kabine.

Im Stauluftkanal ist jeweils ein Gebläse FAN angeordnet, das durch eine gemeinsame Welle mit Verdichter C und Turbine T verbunden ist. Diese Komponenten bilden die sogenannte 3-Rad-Maschine. Das Gebläse FAN dient dazu, Umgebungs- bzw. Stauluft durch die Wärmetauscher SHX und PHX zu fördern. Um die Durchlässigkeit des Stauluftkanals im Flug zu erhöhen, ist ein Gebläsebypass vorgesehen, in dem eine Rückschlagklappe GCKV 1 angeordnet ist.

Die Temperaturregelung bzw. die Regelung der Kühlleistung der Anlage erfolgt durch ein Ventil TCV, das einen Bypass von Verdichter, SHX, Turbine und Wasserabscheidekreislauf ermöglicht. Darüber hinaus kann die Kühlleistung über die Stauluftmenge mittels Klappen (RAIA und RAOA) am Stauluftkanaleinlass und/oder -auslass variiert werden.

Fällt eine Welleneinrichtung bestehend aus Turbine T, Verdichter C und Gebläse FAN aus, kann der Strang dieser teilweise defekten Anlage im Flug weiterhin für die Druckluftförderung mit reduzierter Kühlleistung benutzt werden. Dabei wird die zweite, noch intakte Anlage bezüglich Durchsatz und Kühlleistung unterstützt. Die Kühlung der Druckluft in der teilweisen defekten Anlage erfolgt hierbei nur durch die Stauluft-Wärmetauscher PHX/SHX ohne Entspannung in der ausgefallenen Turbine T. Kommt es zu einem Leitungsbruch, zum Beispiel in der Leitung vom Durchsatzregelventil FCV zum PHX oder kommt es zu einem fehlerhaften Schließen des Durchsatzregelventils FCV oder einer Stauluftklappe, führt dies zum vollständigen Ausfall der betreffenden Anlage. In diesem Fall erfüllt die verbleibende zweite Anlage die Mindestanforderungen (Kühlen, Bedrucken, ...).

Die Baugröße der Anlage wird hauptsächlich durch die großen Komponenten SHX/PHX und Stauluftkanal bestimmt.

Neben der in Figur 1 beispielhaft dargestellten Systemarchitektur mit einer 3-Rad-ACM pro Anlage sind selbstverständlich auch andere Anlagenkonzepte möglich, wie zum Beispiel eine 4-Rad-ACM pro Anlage oder zwei seriell angeordnete ACMs pro Anlage oder motorisierte ACM oder auch unterschiedliche Entfeuchtungssysteme.

All diesen Systemen ist jedoch gemein, dass mindestens zwei separat angeordnete Anlagen zur Erfüllung der Redundanzanforderungen eingesetzt werden.

Figur 2 zeigt ein alternatives aus der EP 0 891 279 B1 oder US-A-5 704 218 bekanntes Klimatisierungssystem. Bei dieser Ausführungsform sind Komponenten mit relativ großer Ausfallwahrscheinlichkeit bei signifikant negativen Systemauswirkungen doppelt vorhanden, wie beispielsweise die Welleneinrichtung ACM und das Durchsatzregelventil FCV. Dagegen sind die Stauluftwärmetauscher SHX, PHX sowie das Wasserabscheidesystem bestehend aus Reheater REH, Kondensor CON und Wasserabscheider WE gemeinsam vorhanden.

Aufgrund der nur einmaligen Anordnung der großbauenden Komponenten PHX, SHX und Stauluftkanal ergibt sich eine relativ kompakte Bauweise und somit ein geringer Bauraumbedarf verglichen mit der oben in Figur 1 dargestellten Systemarchitektur.

Der grundsätzliche Kühlprozess entspricht dem zu Figur 1 erläuterten. Im Normalbetrieb strömt heiße Druckluft von den Triebwerken oder einem Hilfsaggregat mit z. B. 200°C und 3 bar durch die zwei Durchsatzregelventile FCV 1, FCV 2. Die Luft wird anschließend zusammengeführt und in dem gemeinsamen Primärwärmetauscher PHX auf ca. 100°C vorgekühlt. Jeweils etwa die Hälfte der PHX Auslassluft wird im Verdichter 1 (C1) und im Verdichter 2 (C2) verdichtet und nach der Zusammenführung in einem SHX durch die Stauluft auf ca. 40°C abgekühlt.

Zur Kondensation und Wasserabscheidung wird die gekühlte Druckluft durch den Reheater REH; Kondensor CON und den Wasserabscheider WE geleitet. Anschließend wird die auf diese Weise entfeuchtete Druckluft wieder aufgeteilt und jeweils etwa die Hälfte wird in Turbine 1 (T1) und Turbine 2 (T2) entspannt und dabei bis auf -30°C abgekühlt. Nach der Zusammenführung der gekühlten Luft wird diese durch die kalte Seite des Kondensors CON geführt und schließlich mittels einer oder zwei Leitungen in die Mischkammer bzw. Kabine des Flugzeuges geführt.

Auch in diesem Ausführungsbeispiel sind 3-Rad-Maschinen vorgesehen, die aus jeweils einer Turbine, einem Verdichter sowie einem- Gebläse FAN 1, FAN 2 bestehen. Die Turbinenleistung zum Antrieb des Verdichters C1, C2 sowie der Gebläse FAN 1, FAN 2 verwendet. Die Gebläse FAN 1, FAN 2 sind parallel angeordnet, so dass jedes Gebläse am Boden ca. die Hälfte der Umgebungsluft durch den gemeinsamen PHX und SHX fördert. Im Flug erfolgt die Durchströmung von PHX und SHX mit Stauluft hauptsächlich aufgrund des Staudrucks. Die Stauluft wird dem SHX und dem stauluftseitig nachgeschalteten PHX in einem Stauluftkanal zugeführt und nach dem PHX durch einen gemeinsamen Kanal von den zwei Gebläsen FAN 1 und FAN 2 angesaugt. Diese Stauluft strömt dann über zwei getrennte Gebläseauslasskanäle an die Umgebung zurück.

Die Temperaturregelung der Kühlluft erfolgt mittels zweier Temperaturregelventile TCV 1, TCV 2 und den Stauluftkanalklappen RAIA, RAOA 1 und RAOA 2. Die Ventile TCV 1 und TCV 2 dienen zusätzlich dazu, einen synchronen Betrieb der zwei Welleneinrichtungen zu gewährleisten.

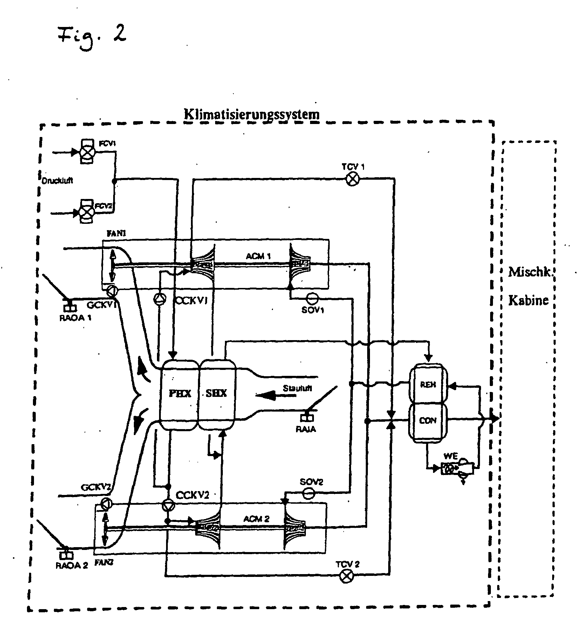

Ein typischer Fehlerfall in einer Anlage gemäß Figur 2 ist der Ausfall einer der Welleneinrichtungen (ACM). Auch in diesem Fall müssen bestimmte Mindestanforderungen bezüglich Luftmenge und Kühlleistung gewährleistet sein. Um diese Funktionen auch im Fehlerfall zu erfüllen, sind zwei zusätzliche Ventile SOV 1, SOV 2 am jeweiligen Turbineneinlass, sowie zwei zusätzliche Rückschlagventile CCKV 1 und CCKV 2 am jeweiligen Verdichtereinlass integriert.

Fällt beispielsweise die ACM 1 aufgrund einer festsitzenden Welle aus, verhindert das Rückschlagventil CCKV 1, dass die verdichtete Luft von dem in Betrieb befindlichen Verdichter C 2 über den Verdichter C 1 auf die Einlasseite des Verdichters C 2 zurückströmt, wodurch sich eine nutzlose Kreisströmung ergeben würde. Das Ventil SOV 1 wird geschlossen, damit die vom Verdichter C 2 verdichtete Luft nicht nutzlos über die stehende Turbine T 1, sondern ausschließlich über die funktionierende Turbine T 2 entspannt wird. Aufgrund des Ausfalls einer ACM sollte die verbleibende intakte ACM nunmehr die gesamte Luft fördern. Dies ist jedoch nicht möglich, da jede ACM aus Gründen des Gewichts sowie der Baugröße nur auf ca. 50 % der Gesamtluftmenge ausgelegt ist, die im Normalbetrieb anfällt. Die doppelte Luftmenge kann nicht bewältigt werden. Um dennoch die erforderliche Luftmenge zur Verfügung zu stellen und die notwendige Durchlässigkeit des Systems zu erreichen, ist somit ein teilweiser Bypass der verbleibenden, in Betrieb befindlichen ACM 2 durch ein Öffnen des TCV 2 erforderlich.

Darüber hinaus ist es erforderlich, dass im Bodenbetrieb (kein Staudruck) und ausgefallener Welleneinrichtung (zum Beispiel ACM 1) die zugehörige Stauluftkanalauslassklappe RAOA 1 geschlossen wird, da ansonsten das in Betrieb befindliche Gebläse FAN 2 die Luft vom anderen Auslasskanal und nicht durch die Stauluftwärmetauscher ansaugen würde. Aus diesem Grund erfordert das in Figur 2 dargestellte System wenigsten zwei steuerbare Stauluftauslassklappen.

Neben der in Figur 2 beispielhaft dargestellten Architektur mit zwei 3-Rad-ACMs pro Anlage bzw. pro gemeinsam genutztem Wärmetauscher, sind auch andere Anlagenkonzepte möglich und bekannt, wie beispielsweise zwei parallel angeordnete 4-Rad-ACMs pro Anlage oder zwei seriell angeordnete ACMs pro Anlage oder motorisierte ACMs oder auch unterschiedliche Entfeuchtungssyteme.

Unabhängig davon ist den bekannten Sytemen jedoch gemein, dass mindestens zwei Welleneinrichtungen pro Anlage und pro gemeinsam genutztem Wärmetauscher zu Erfüllung der Redundanzanforderungen eingesetzt werden.

Die in Figur 1 und Figur 2 dargestellten Systeme sind mit den folgenden Nachteilen verbunden:

Das Sytem gemäß Figur 1 weist den Nachteil eines erhöhten Bauraumbedarfs auf, was zur Folge hat, dass der nutzbare Raum für andere Flugzeugsysteme bzw. Fracht reduziert wird. Darüber hinaus besteht die Notwendigkeit von zwei Stauluftkanälen und damit zwei Stauluftein- und -auslässen einschließlich Klappen im Flugzeugrumpf mit entsprechendem Bauraumbedarf und Gewicht.

Die Ausführung gemäß Figur 2 mit einfach vorhandener Anlage mit teilweise zweifach vorhandenen Komponenten bringt folgende Nachteile mit sich: verglichen mit der Ausführung gemäß Figur 1 sind zusätzlich Komponenten notwendig: zwei Ventile (SOV 1 und SOV 2) sowei zwei Rückschlagklappen (CCKV 1 und CCKV 2), wobei insbesondere Ventile eine relativ geringe Zuverlässigkeit haben und damit die Systemzuverlässigkeit reduzieren. Die Systemkomplexität und die Kosten werden erhöht. Der Ausfall eines SOV oder eines CCKV in geschlossener Position führt zum kompletten Ausfall der entsprechenden Welleneinrichtung.

Das System gemäß Figur 2 erfordert darüber hinaus zwei Stauluftauslasskanäle mit jeweils einer Stauluftauslassklappe im Flugzeugrumpf mit den Nachteilen eines hohen Bauraumbedarfs und Gewichts.

Die Gewährleistung eines synchronen Betriebs der zwei Welleneinrichtungen verlangt zusätzlichen Kontroll- und Regelaufwand. Bei Ausfall einer Welleneinrichtung ist ein schnelles Betätigen der Ventile (zum Beispiel SOV) notwendig, um einen korrekten Betrieb und das Erfüllen der Funktionen Bedruckung, Belüftung und Kühlung sicher zu stellen. Bestimmte Komponenten des Systems gemäß Figur 2 sind nur einfach vorhanden, wie dies beispielsweise für die Leitung von FCV 1 und FCV 2 zum PHX und/oder für den Wärmetauscher und/oder das Wasserabscheidesystem gilt. Ein Ausfall nur einer dieser Komponenten, wie zum Beispiel ein Leitungsbruch, führt zum Totalausfall des gesamten Klimatisierungssystems.

Beim Ausfall einer Welleneinrichtung ist die Kühlleistung und Durchlässigkeits des Systems im Vergleich zu der Ausführungsform gemäß Figur 1 deutlich geringer. Fällt zum Beispiel die Welleneinrichtung ACM 1 aus (festsitzende Welle), dann verhindert das Rückschlagventil CCKV 1, dass die verdichtete Luft vom im Betrieb befindlichen Verdichter C 2 über den Verdichter C 1 strömt (nutzlose Kreisströmung). Das SOV 1 wird geschlossen, damit die vom Verdichter C 2 verdichtete Luft nicht nutzlos über die stehende Turbine T 1, sondern ausschließlich über die funktionierende Turbine T 2 entspannt wird. Aufgrund des Ausfalls einer ACM sollte die verbleibende ACM nun die gesamte Luft fördern, was jedoch nicht möglich ist, da jede ACM nur auf ca. 50 % der Gesamtluftmenge ausgelegt ist (Normalbetrieb). Eine ACM kann daher nicht die doppelte Luftmenge bewältigen. Dadurch wird die Durchlässigkeit und Kühlleistung der Anlage im Fehlerfall stark reduziert.

Auch durch eine Überdimensionierung der ACMs, d.h. die Auslegung auf beispielsweise 70 % anstatt 50 % des Gesamtdurchsatzes, lässt sich dieser Nachteil nur unzureichend kompensieren, weil sich dadurch der Bauraumbedarf und das Gewicht der ACMs erhöht. Das Gewicht einer Komponente ist im wesentlichen eine Funktion des Durchsatzes.

Es ist die Aufgabe der vorliegenden Erfindung ein Klimatisierungssystem der eingangs genannten Art dahingehend weiter zu bilden, dass dieses eine geringe Kompentenanzahl, eine kompakte Bauweise, eine hohe Zuverlässigkeit, eine hohe Redundanz sowie eine hohe Kühlleistung bei Ausfall einer Welleneinrichtung im Flug aufweist.

Diese Aufgabe wird durch ein Klimatisierungssystem mit den Merkmalen des Patentanspruchs 1 gelöst. Danach umfasst der Wärmetauscher wenigstens eine erste (SHX 1/ PHX 1) und zweite Wärmetauschereinheit (SHX 2/ PHX 2), von denen jeweils eine druckluftseitig mit jeweils einer der Welleneinrichtungen in Verbindung steht. Ferner sind strömungsmechanisch voneinander getrennte Stauluftauslasskanäle vorgesehen, von denen einer mit der ersten Wärmetauschereinheit und einer mit der zweiten Wärmetauschereinheit in Verbindung steht. Im Gegensatz zu der Ausführung gemäß Figur 2 sind die Wärmetauschereinheiten zweifach vorhanden. Jeweils eine der Welleneinrichtungen steht mit einer der Wärmetauschereinheiten druckluftseitig in Verbindung. Dadurch werden keine Ventile am Verdichtereinlass (CCKV in Figur 2) benötigt. Dadurch ist der Ausfall einer Welleineinrichtung nur aufgrund eines Ausfalls dieser Ventile unmöglich. Im Vergleich zu der Ausführungsform gemäß Figur 2 ergibt sich ferner der Vorteil, dass bei Ausfall einer Welleneinrichtung im Flug eine geringere Reduzierung der Kühlleistung und Systemdurchlässigkeit auftritt. Dies ist möglich, da aufgrund der getrennten Druckluftführung der Anlagenteil mit der ausgefallenen Welleneinrichtung zur Druckluftförderung und Wärmetauscherkühlung genutzt werden kann. Ein weiterer Vorteil ergibt sich daraus, dass nicht zwingend zwei Stauluftkanalauslassklappen benötigt werden, woraus sich entsprechende Kosten-, Bauraum- und Gewichtsvorteile ergeben. Durch die strömungsmechanische Trennung der beiden Stauluftauslasskanäle voneinander wird erreicht, dass das funktionierende Gebläse stets Luft durch den oder die Wärmetauscher und nicht aus dem anderen Auslasskanal ansaugt.

Bei dem Fluid kann es sich um Umgebungsluft bzw. Stauluft handeln.

In weiterer Ausgestaltung der vorliegenden Erfindung ist vorgesehen, daß erste und zweite Wärmetauschereinheit eine mechanische Einheit bilden. Denkbar ist, daß die Wärmetauschereinheiten unmittelbar oder auch nicht unmittelbar miteinander in Verbindung stehen, sondern beispielsweise durch einen Spalt getrennt sind.

In weiterer Ausgestaltung der vorliegenden Erfindung besteht jede Welleneinrichtung aus mindestens einer Turbine und mindestens einem Verdichter und/oder einem Gebläse. Beispielsweise können die Welleneinrichtungen als 3-Rad-Maschinen ausgeführt sein. Diese bestehen aus Turbine, Verdichter und Gebläse.

In jedem der Stauluftauslasskanäle ist vorteilhaft ein Gebläse zur Förderung von Umgebungs- bzw. Stauluft durch den Wärmetauscher vorgesehen.

In bevorzugter Ausgestaltung der vorliegenden Erfindung sind die beiden geteilten, d. h. strömungsmechanisch getrennten Stauluftauslasskanäle jeweils in einen Gebläseauslasskanal und einen Gebläsebypasskanal weiter unterteilt. Die Stauluftauslasskanäle können dabei mechanisch getrennt (separat) oder mechanisch gemeinsam (parallel) verlaufen. Der Bypasskanal dient zur Erhöhung der Durchlässigkeit des Stauluftkanals im Flug.

Es können in jedem der Bypasskanäle ein Rückschlagventil und/oder eine gemeinsame oder zwei getrennte Stauluftkanalauslassklappen zum Schließen der Bypasskanäle der Stauluftauslasskanäle vorgesehen sein. Somit kann der Auslass der beiden Bypasskanäle durch eine gemeinsame Klappe oder durch zwei Klappen, von denen jeweils eine pro Bypasskanal angeordnet ist, geschlossen werden. Im geschlossenen Zustand verschließt die Klappe bzw. die Klappen nur die Bypasskanäle. Gegenüber dem Stand der Technik gemäß Figur 1 und Figur 2 kann das vorliegende System mit nur einer Stauluftkanalauslassklappe betrieben werden. Daraus ergeben sich Kosten-, Bauraum- und Gewichtsvorteile.

In weiterer Ausgestaltung der vorliegenden Erfindung ist vorgesehen, dass die Wärmetauscheinheiten stauluftseitig strömungsmechanisch voneinander getrennt sind und mit Umgebungs- bzw. Stauluft aus einem gemeinsamen Stauluftkanal beaufschlagt werden. Somit erfolgt die stauluftseitige Durchströmung der Wärmetauscher getrennt, wobei ein gemeinsamer Staulufteinlasskanal und getrennte und vorzugsweise parallel nebeneinander verlaufende Stauluftauslasskanäle genutzt werden.

Erfindungsgemäß kann ein strömungsmechanisch gemeinsamer Staulufteinlasskanal und strömungsmechanisch voneinander getrennte Stauluftauslasskanäle vorgesehen sein, von denen einer mit der ersten und einer mit der zweiten Wärmetauschereinheit in Verbindung steht.

In weiterer Ausgestaltung der vorliegenden Erfindung ist vorgesehen, dass eine Stauluftkanaleinlassklappe vorgesehen ist.

In weiterer Ausgestaltung der vorliegenden Erfindung umfasst der Wärmetauscher einen Primär- und einen Sekundärwärmetauscher. Die Druckluft wird zunächst im Primärwärmetauscher abgekühlt, anschließend im Verdichter weiter verdichtet und dann durch den Sekundärwärmetauscher geführt und darin weiter abgekühlt.

Eine besonders kompakte Bauweise ergibt sich, wenn der Primär- und Sekundärwärmetauscher eine mechanische Einheit bilden. Es kann vorgesehen sein, daß Primär- und Sekundärwärmetauscher unmittelbar aneinandergrenzen oder auch z.B. durch einen Spalt voneinander beabstandet angeordnet sind.

Der Primär- und Sekundärwärmetauscher können stauluftseitig seriell, parallel oder derart angeordnet sein, dass ein Teil des Primärwärmetauschers parallel und ein Teil seriell zum Sekundärwärmetauscher von Umgebungsluft bzw. Stauluft durchströmt wird. Im ersten Fall ist der Primärwärmetauscher dem Sekundärwärmetauscher stauluftseitig nachgeschaltet, im zweiten Fall parallel geschaltet und im dritten Fall zum Teil seriell und zum Teil parallel angeordnet, was den Vorteil mit sich bringt, daß der Primärwärmetauscher wengistens teilweise, vorzugsweise in seinem druckluftseitigen Auslassbereich, mit kühler Umgebungs- bzw. Stauluft beaufschlagt wird.

In weiterer Ausgestaltung der vorliegenden Erfindung ist vorgesehen, dass die Wärmetauscheinheiten über eine eigene Druckluftversorgung verfügen. In jeder der Druckluftversorgungsleitungen ist ein Durchflussregelventil angeordnet.

Ferner kann vorgesehen sein, dass mit einer Wärmetauschereinheit (z. B. SHX 1/PHX 1) zwei oder mehr seriell oder parallel geschaltete Welleneinrichtungen in Verbindung stehen. Darüber hinaus kann vorgesehen sein, dass es sich um mehr als zwei Wärmetauschereinheiten handelt, von denen jede mit einer oder mehreren Welleneinrichtungen druckluftseitig in Verbindung steht.

Gemäß einer bevorzugten Ausgestaltung der vorliegenden Erfindung ist vorgesehen, dass mit jeder der Welleneinrichtungen ein Wasserabscheidesystem in Verbindung steht. Dieses dient dazu, einen Großteil des in der Druckluft befindlichen Wasser abzuscheiden.

Das Wasserabscheidesystem kann unterschiedlich ausgeführt sein.

Eine mögliche Ausführungsform besteht aus Reheater, Kondensor und Wasserabscheider. Die Druckluft durchströmt zunächst den Reheater und wird hierin abgekühlt. Anschließend erfolgt im Kondensor die Kondensation der in der Druckluft enthaltenen Feuchtigkeit. Die Abscheidung des Wassers aus der Druckluft erfolgt im Wasserabscheider. Die Luft durchströmt anschließend den Reheater, in dem sie aufgewärmt wird und nicht abgeschiedene Tröpfchen verdampft werden, bevor die Luft in der Turbine entspannt und abgekühlt wird. Die entspannte Turbinenluft wird durch die kalte Seite des Kondensors geführt und anschließend der Mischkammer bzw. der Kabine zugeführt.

In weiterer Ausgestaltung der vorliegenden Erfindung ist vorgesehen, dass die Wasserabscheidesysteme, die als Wasserabscheidekreisläufe ausgeführt sein können, strömungsmechanisch voneinander getrennt und eine mechanische Einheit bilden oder mechanisch getrennt angeordnet sind. Die genannten für die Entfeuchtung notwendigen Komponenten werden somit getrennt durchströmt und verfügen über eine getrennte Wärmeübertragung für die jeweilige Welleneinrichtung, sind beispielsweise jedoch in einer mechanischen Einheit miteinander verbunden, wodurch sich eine entsprechend kompakte Bauweise ergibt. Ebenso ist es möglich, dass die Entfeuchtungssysteme mechanisch voneinander getrennt ausgeführt sind.

Gemäß einer weiteren Ausgestaltung der vorliegenden Erfindung kann vorgesehen sein, dass die gekühlte Luft über eine oder über mehrere Leitungen in die Mischkammer oder in die Kabine geführt wird. Es kann sich beispielsweise um zwei Leitungen handeln.

Weitere Einzelheiten und Vorteile der vorliegenden Erfindung werden anhand eines in der Zeichnung dargestellten Ausführungsbeispiels näher erläutert. Es zeigen:
- Figur 1,2:: Klimatisierungssysteme gemäß dem Stand der Technik,
- Figur 3:: eine Darstellung eines Klimatisierungssystems gemäß der vorliegenden Erfindung mit Primär- und Sekundärwärmetauscher mit jeweils zwei Wärmetauschereinheiten sowie mit einer Wasserabscheideeinheit für beide ACMs,
- Figur 4:: eine Darstellung eines aus Primär- und Sekundärwärmetauscher bestehenden Stauluftwärmetauschers mit getrennter Durchströmung,
- Figur 5:: eine schematische Darstellung zweier zu einer mechanischen Einheit zusammengefassten Wasserabscheidekreisläufe bestehend aus Reheater, Kondensor und Wasserabscheider mit getrennter Durchströmung,
- Figur 6:: eine Darstellung eines erfindungsgemäßen Klimatisierungssystems mit Primär- und Sekundärwärmetauscher mit jeweils zwei Wärmetauschereinheiten sowie mit mechanisch getrennten Wasserabscheidekreisläufen und einer gemeinsamen Stauluftauslassklappe für beide Gebläsebypasskanäle,
- Figur 7:: eine schematische Darstellung eines Klimatisierungssystems gemäß Figur 3, wobei die Gebläsebypasskanäle mit jeweils einer eigenen Stauluftauslassklappe verschließbar sind und
- Figur 8:: eine Darstellung eines Klimatisierungssystems gemäß der vorliegenden Erfindung mit Primär- und Sekundärwärmetauscher mit jeweils zwei Wärmetauschereinheiten sowie mit als 4-Rad-Maschinen ausgeführten ACMs.

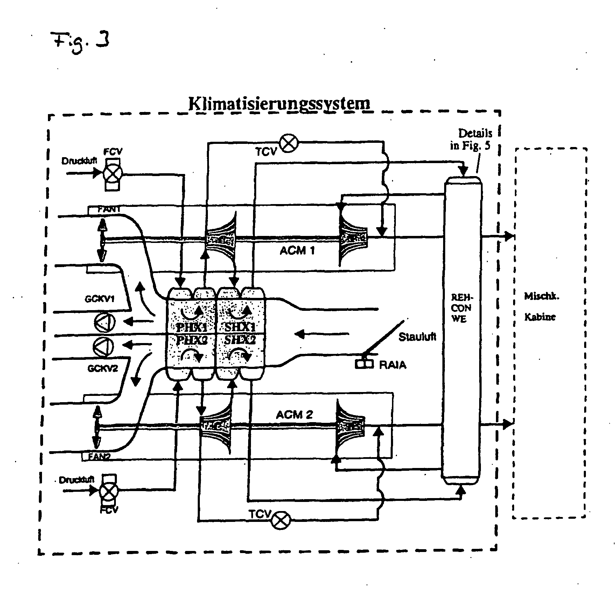

Figur 3 zeigt in einer schematischen Darstellung eine mögliche Ausführungsform des Klimatisierungssystem gemäß der vorliegenden Erfindung. Im Stauluftkanal ist ein Primärwärmetauscher sowie ein Sekundärwärmetauscher angeordnet. Beide Wärmetauscher bestehen aus strömungsmechanisch und wärmetechnisch voneinander getrennten Wärmetauschereinheiten PHX 1 und PHX 2 bzw. SHX 1 und SHX 2. Die Einheiten PHX 1 und PHX 2 sowie SHX 1 und SHX 2 können eine mechanische Einheit bilden und untereinander ebenfalls miteinander verbunden sein, so dass sich eine besonders kompakte Bauweise ergibt. Es kann vorgesehen sein, daß die Wärmetauschereinheiten PHX 1 und SHX 1 sowie PHX 2 und SHX 2 durch einen Spalt voneinander getrennt ausgeführt sind.

Wie aus Figur 3 ersichtlich, ist für beide Wärmetauschereinheiten SHX 1/PHX 1 und SHX 2/PHX 2 ein gemeinsamer Staulufteinlasskanal vorgesehen. Die Stauluft strömt durch die Wärmetauschereinheit SHX 1 und anschließend durch die Einheit PHX 1 und davon getrennt durch die Wärmetauschereinheiten SHX 2 und PHX 2.

Wie aus Figur 3 weiter ersichtlich, sind zwei voneinander getrennte Stauluftauslasskanäle vorgesehen, von denen jeweils einer mit einer Wärmetauschereinheit PHX 1 und PHX 2 in Verbindung steht. Jeder der Stauluftauslasskanäle ist geteilt und weist einen mit jeweils einem Rückschlagventil GCKV 1, GCKV 2 ausgeführten Bypasskanal auf. In dem anderen Teil der Stauluftauslasskanäle ist jeweils ein Gebläse FAN 1, FAN 2 angeordnet. Diese bilden gemeinsam mit dem zugehörigen Verdichter C und der zugehörigen Turbine T jeweils eine 3-Rad-Maschine.

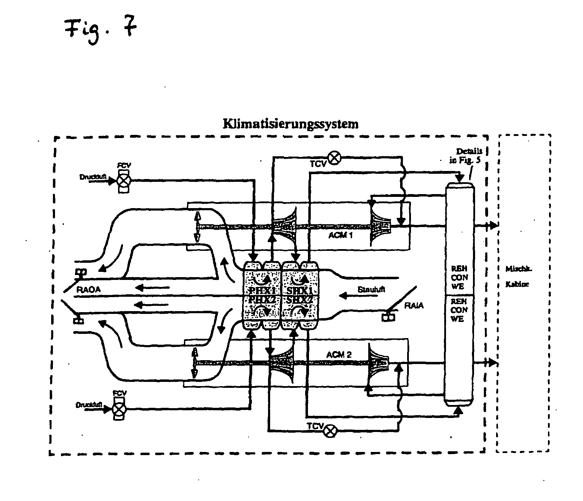

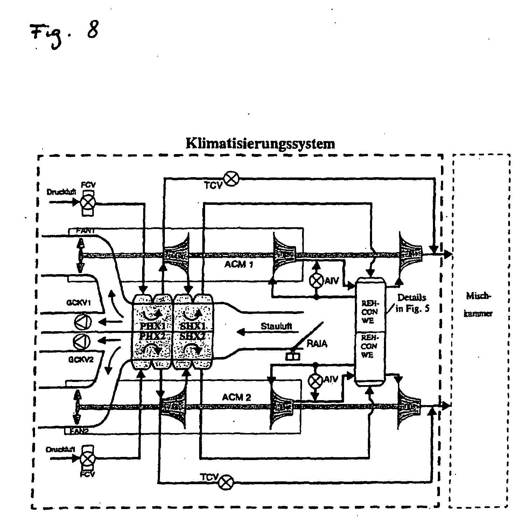

In Figur 3 ist ferner das Wasserabscheidesystem REH-CON WE dargestellt. Dieses dient zum Abscheiden von Wasser aus der Druckluft vor deren Entspannung in der Turbine T. Einzelheiten des Wasserabscheidesystems REH-CON WE werden zu Figur 5 erläutert.

Die Funktionsweise des in Figur 3 dargestellten Klimatisierungssystems gestaltet sich wie folgt: Die Primärwärmetauschereinheiten PHX 1, PHX 2 werden jeweils getrennt mit Druckluft versorgt. Einlasseitig sind jeweils ein Durchflussregelventil FCV angeordnet. Nach Durchströmung der strömungsmechanisch voneinander getrennten Wärmetauschereinheiten PHX 1, PHX 2 und der darin erfolgenden Abkühlung der Druckluft wird diese durch jeweils einen Verdichter C geführt und hierin weiter verdichtet. Die auf diese Weise verdichtete Druckluft wird anschließend durch die jeweilige strömungs- und wärmetechnisch getrennte Sekundärwärmetauschereinheit SHX 1 und SHX 2 geführt und gelangt anschließend in das Wasserabscheidesystem REH-CON WE. In diesem System, das ebenfalls eine mechanische Einheit bildet, das aber zwei strömungsmechanisch und wärmetechnisch voneinander getrennte Wasserabscheidesysteme umfasst, erfolgt die Wasserabscheidung und damit Entfeuchtung der Luft vor deren Zuführung in die entsprechenden Turbinen T. In den Turbinen T wird die Luft entspannt und abgekühlt. Die abgekühlte Luft dient zur Kühlung des Kondensors der Wasserabscheideeinheit REH-CON WE. Die Luft wird anschließend in die Mischkammer der Kabine geführt.

Zur Kühlung der Primär- und Sekundärwärmetauschereinheiten PHX 1, PHX 2, SHX 1, SHX 2 dient Umgebungsluft bzw. Stauluft. Diese strömt durch den gemeinsamen Staulufteinlasskanal zunächst in die Wärmetauschereinheiten SHX 1, SHX 2 des Sekundärwärmetauschers. Die Stauluftmenge wird durch die Staulufteinlassklappe RAIA geregelt. Die Sekundärwärmetauschereinheiten SHX 1 und SHX 2 sind nicht nur druckluftseitig, sondern auch stauluftseitig voneinander getrennt. Dies gilt entsprechend für die Primärwärmetauschereinheiten PHX 1 und PHX 2. Entsprechend strömt die Stauluft getrennt durch die seriell angeordneten Einheiten SHX 1 und PHX 1, bzw. SHX 2 und PHX 2. Die aus den Wärmetauschereinheiten PHX 1 und PHX 2 austretenden Luftströme gelangen in die voneinander getrennten Stauluftkanäle und passieren die Gebläse FAN 1 bzw. FAN 2 bzw. strömen durch die Bypasskanäle in die Umgebung.

Das System verfügt ferner über mit einem Temperaturregelventil TCV verschließbare Bypassleitungen, die sich von der Eingangsseite des Verdichters C zur Auslassseite der Turbine T erstrecken.

Neben der in Figur 3 beispielhaft dargestellten Architektur mit 3-Rad ACMs und Hochdruckwasserabscheidesystem kann die Erfindung auch mit anderen Ausführungen von Welleneinrichtungen aus mindestens einer Turbine und mindestens einem Gebläse und/oder mindenstens einem Verdichter realisiert werden. Des weiteren ist die Erfindung auch mit anderen Ausführungen von Wasserabscheidesystemen möglich.

Ein weiteres Ausführungsbeispiel mit einer 4-Rad ACM ist in Fig. 8 dargestellt.

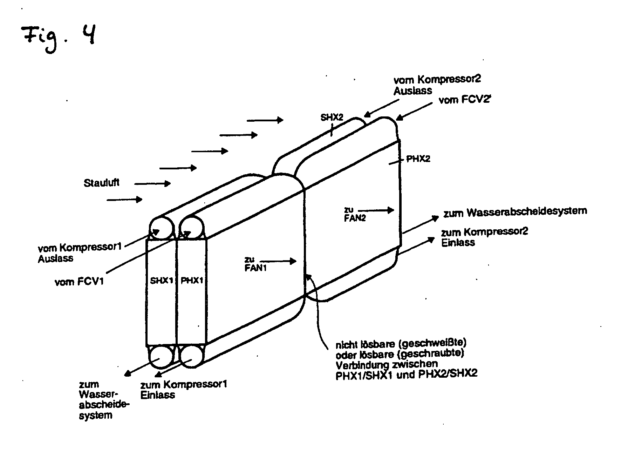

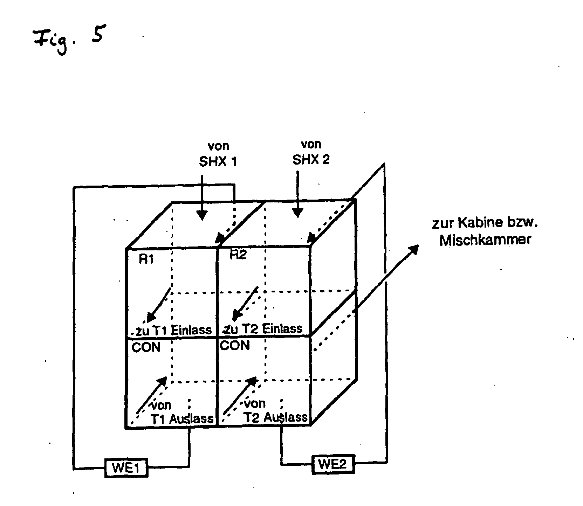

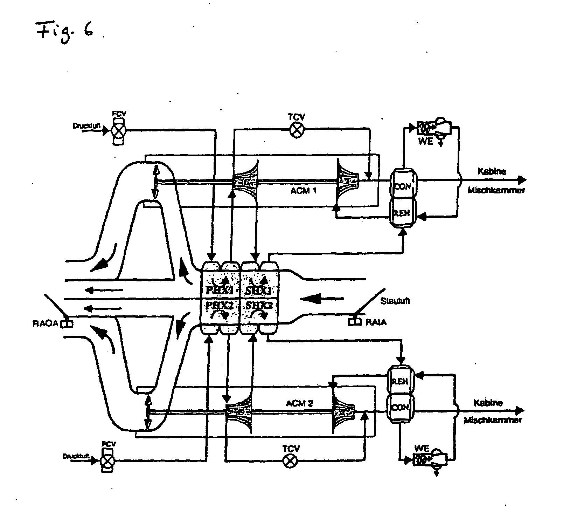

Figur 4 zeigt in einer perspektivischen Darstellung den eine mechanische Einheit bildenden Stauluft-Wärmetauscher mit vier Wärmetauschereinheiten. Wie bereits zu Figur 3 erläutert verfügt der Stauluft-Wärmetauscher über einen gemeinsamen Staulufteinlass. Die Stauluft strömt anschließend voneinander getrennt durch die seriell angeordneten Wärmetauschereinheiten SHX 1, PHX 1 bzw. SHX 2 und PHX 2. Anschließend gelangt die Stauluft zu den Gebläsen FAN 1 und FAN 2. Druckluftseitig wird zunächst die Wärmetauschereinheit PHX 1 bzw. parallel dazu PHX 2 mit Druckluft beaufschlagt. Diese gelangt über die entsprechenden Durchflussregelventile FCV 1 und FCV 2 zu den jeweiligen Wärmetauschereinheiten PHX 1, PHX 2. Die Luft wird in den Wärmetauschereinheiten PHX 1 und PHX 2 abgekühlt und gelangt zu dem jeweiligen Verdichter C. Die darin verdichtete Luft strömt zum Eingang der Sekundärwärmetauschereinheiten SHX 1 und SHX 2, wird darin weiter abgekühlt und strömt schließlich zum Wasserabscheidesystem.

Die Verbindungsstelle zwischen PHX 1/SHX 1 und PHX 2/SHX 2 kann lösbar sein, wie zum Beispiel geschraubt, oder nicht lösbar, wie zum Beispiel verschweißt ausgeführt sein.

Figur 5 zeigt in einer schematischen Darstellung das Wasserabscheidesystem REH-CON WE aus Figur 3. Es handelt sich dabei um zwei strömungsmechanisch und wärmetechnisch voneinander entkoppelte und getrennte Wärmeabscheidekreisläufe, die eine mechanische Einheit bilden. Vom SHX 1 und parallel dazu vom SHX 2 strömt die zu entfeuchtende Luft zunächst in die Reheater R 1 und R 2. Anschließend strömt die Luft durch die Kondensoren CON. Die Feuchtigkeit wird in den nachgeschalteten Wasserabscheidern WE 1 und WE 2 abgeschieden. Die auf diese Weise entfeuchtete Luft strömt anschließend durch die Reheater R 1 und R 2 und wird darin geringfügig erwärmt, so dass etwaige noch vorhandene Wassertröpfchen verdampft werden. Von den Reheatem gelangt die Luft zu den jeweiligen Einlässen der Turbinen T 1 und T 2. Die Kondensoren CON stehen mit den Turbinenauslässen in Verbindung. Die kalte, in den Turbinen T 1, T 2 enspannte Luft wird durch die kalte Seite der Kondensoren CON geführt und bedingt die Kondensation der Feuchtigkeit auf der warmen Kondensorseite.

Nach Durchströmen der Kondensoren CON wird die Luft zur Kabine bzw. zur Mischkammer geführt.

Das Klimatisierungssystem gemäß Figur 3 bis 5 weist die Vorteile auf, dass sämtliche Komponenten zweifach vorhanden sind. Verglichen mit der Ausführungsform gemäß Figur 2 aus dem Stand der Technik kann somit der Ausfall einer Komponente nicht zum Totalausfall des gesamten Systems führen. Es sind insbesondere keine Ventile am Verdichtereinlass CCKV und Turbineneinlass SOV wie in Figur 2 vorgesehen. Der Ausfall einer Welleneinrichtung durch Ausfall eines dieser Ventile ist somit ausgeschlossen.

Gegenüber der Ausführungsform gemäß Figur 1 ergibt sich aufgrund der kompakten Anordnung der Wärmetauscher und des Stauluftkanals ein reduzierter Bauraumbedarf. Gegenüber der Ausführungsform in Figur 2 ergibt sich ebenfalls ein reduzierter Bauraumbedarf aufgrund der reduzierten Komponentenanzahl. Dies gilt insbesondere für die geringere Anzahl von Stauluftklappen sowie von Kontroll- und Rückschlagventilen.

Verglichen mit der Ausführungsform gemäß Figur 2 kann bei dem erfindungsgemäßen System aufgrund der strömungsmechanischen Trennung der beiden Welleneinrichtungen auch bei Ausfall einer Welleneinrichtung die Druckluft weiterhin mittels der Stauluftwärmetauscher gekühlt werden. Des weiteren kann ein einzelner Fehler, z. B. Leitungsbruch, nicht zu einem Totalausfall des Gesamtsystems führen.

Darüber hinaus besteht verglichen mit dem Stand der Technik gemäß Figur 1 und Figur 2 die Möglichkeit des Einsatzes von nur einer Stauluftkanalauslassklappe, woraus sich entsprechende Kosten-, Bauraum- und Gewichtsvorteile ergeben.

Figur 6 zeigt ein Klimatisierungssystem bei dem sämtliche Komponenten mit Ausnahme des Wasserabscheidesystems und der Stauluftkanalauslassklappen RAOA denen in Figur 3 entsprechen. Anders als bei dem Klimatisierungssystem gemäß Figur 3 sind zwei mechanisch voneinander getrennte Wasserabscheidekreisläufe vorgesehen. Diese stehen mit jeweils einer Auslassleitung mit der Kabine bzw. Mischkammer in Verbindung.

Ein weiterer Unterschied zu Figur 3 ergibt sich daraus, dass die Gebläsebypasskanäle auf der Stauluftauslasseite mittels einer Stauluftkanalauslassklappe RAOA verschließbar sind.

Die Stauluftkanaleinlassklappen RAIA können mit einem oder aus Redundanzgründen mit zwei Motoren betätigt werden.

Die nachfolgende Tabelle zeigt einen weiteren Vorteil des erfindungsgemäßen Klimatisierungssystems. Hier sind die Anzahl der Bauteile pro Klimatisierungssystem einander gegenübergestellt. Verglichen werden die Anzahl der Bauteile des erfindungsgemäßen Klimatisierungssystems gemäß Figur 6 mit den Ausführungsformen gemäß Figur 1 und Figur 2 aus dem Stand der Technik. Durch die reduzierte Komponentenanzahl ergibt sich zum einen ein geringerer Bauraumbedarf (Stauluftklappen, Wärmetauschereinheiten) sowie eine Kostenreduktion durch Einsparung relativ teurer Komponenten, wie Ventilen und Stauluftklappen.

| **Bauteilbezeichnung** | **Anzahl der Bauteile pro Klimatisierungssystem** | | |
|---|---|---|---|
| | **Stand der Technik Ausführung Fig. 1** | **Stand der Technik Ausführung Fig. 2** | **Vorliegende Erfindung Fig. 6** |
| Kontrollventile und Rückschlagventile | 6 | 10 | 4 |
| Stauluftklappen | 4 | 3 | 2 |
| Wärmetauscher | 4 | 2 | 2 |
| Wasserabscheider | 2 | 1 | 2 |

Figur 7 zeigt eine schematische Darstellung eines Klimatisierungssystems gemäß Figur 3, wobei die Gebläsebypasskanäle mit jeweils einer eigenen Stauluftauslassklappe RAOA verschließbar sind.

Figur 8 zeigt ein Klimatisierungssystem, bei dem die ACMs als 4-Rad-Maschinen ausgeführt sind. Die Luft wird bei diesem Ausführungsbeispiel nach Verlassen des Wasserabscheidesystems nicht unmittelbar in die Mischkammer geführt, sondern, wie aus Figur 8 ersichtlich, in einer weiteren Turbinenstufe T entspannt und schließlich in die Mischkammer geführt.

## Patentansprüche

1. Klimatisierungssystem, insbesondere für Flugzeuge, mit wenigstens einem in einem Stauluftkanal angeordneten Wärmetauscher zur Kühlung von Druckluft durch ein Fluid sowie mit wenigstens einer ersten (ACM 1) und zweiten Welleneinrichtung (ACM 2), die mit dem Wärmetauscher druckluftseitig in Verbindung stehen, sowie mit strömungsmechanisch voneinander getrennten Stauluftauslasskanälen,
**dadurch gekennzeichnet,**
**dass** der Wärmetauscher wenigstens eine erste (PHX 1, SHX 1) und zweite Wärmetauschereinheit (PHX 2, SHX 2) umfasst, von denen jeweils eine druckluftseitig mit jeweils einer der Welleneinrichtungen (ACM 1, ACM 2) in Verbindung steht, und dass einer der Stauluftauslasskanäle mit der ersten Wärmetauschereinheit (PHX 1, SHX 1) und einer der Stauluftauslasskanäle mit der zweiten Wärmetauschereinheit (PHX 2, SHX 2) in Verbindung steht.

2. Klimatisierungssystem nach Anspruch 1, **dadurch gekennzeichnet, dass** es sich bei dem Fluid um Umgebungs- bzw. Stauluft handelt.

3. Klimatisierungssystem nach Anspruch 1 oder 2, **dadurch gekennzeichnet, dass** die erste (PHX 1, SHX 1) und zweite Wärmetauschereinheit (PHX 2, SHX 2) eine mechanische Einheit bilden.

4. Klimatisierungssystem nach einem der Ansprüche 1 bis 3, **dadurch gekennzeichnet, dass** jede Welleneinrichtung (ACM 1, ACM 2) aus mindestens einer Turbine und mindestens einem Verdichter und/oder mindestens einem Gebläse besteht.

5. Klimatisierungssystem nach einem der Ansprüche 1 bis 4, **dadurch gekennzeichnet, dass** in jedem der Stauluftkanäle ein Gebläse (FAN 1, FAN 2) zur Förderung von Umgebungs- bzw. Stauluft durch den Wärmetauscher vorgesehen ist.

6. Klimatisierungssystem nach einem der Ansprüche 1 bis 5, **dadurch gekennzeichnet, dass** die geteilten Stauluftauslaßkanäle jeweils in einen Gebläseauslasskanal und einen Gebläsebypasskanal weiter unterteilt sind.

7. Klimatisierungssystem nach Anspruch 6, **dadurch gekennzeichnet, dass** in jedem der Bypasskanäle ein Rückschlagventil (GCKV 1, GCKV 2) vorgesehen ist und/oder dass eine gemeinsame oder zwei getrennte Stauluftkanalauslassklappen (RAOA) zum Schließen der Bypasskanäle der Stauluftauslasskanäle vorgesehen sind.

8. Klimatisierungssystem nach einem der Ansprüche 1 bis 7, **dadurch gekennzeichnet, dass** die Wärmetauschereinheiten (PHX 1, SHX 1, PHX 2, SHX 2) stauluftseitig strömungsmechanisch voneinander getrennt sind und mit Umgebungs- bzw. Stauluft aus einem gemeinsamen Stauluftkanal beaufschlagt werden.

9. Klimatisierungssystem nach einem der Ansprüche 1 bis 8, **dadurch gekennzeichnet, dass** eine Stauluftkanaleinlassklappe (RAIA) vorgesehen ist.

10. Klimatisierungssystem nach einem der Ansprüche 1 bis 9, **dadurch gekennzeichnet, dass** der Wärmetauscher einen Primär- und einen Sekundärwärmetauscher umfasst.

11. Klimatisierungssystem nach Anspruch 10, **dadurch gekennzeichnet, dass** der Primär- und Sekundärwärmetauscher (PHX 1, SHX 1; PHX 2, SHX2) eine mechanische Einheit bilden.

12. Klimatisierungssystem nach Anspruch 10 oder 11, **dadurch gekennzeichnet, dass** der Primär- und Sekundärwärmetauscher stauluftseitig seriell, parallel oder derart angeordnet sind, dass ein Teil des Primärwärmetauschers parallel und ein Teil seriell zum Sekundärwärmetauscher von Umgebungs- bzw. Stauluft durchströmt wird.

13. Klimatisierungssystem nach einem der Ansprüche 1 bis 12, **dadurch gekennzeichnet, dass** die Wärmetauschereinheiten (PHX 1, SHX 1; PHX 2, SHX 2) über eine eigene Druckluftversorgung verfügen.

14. Klimatisierungssystem nach einem der Ansprüche 1 bis 13, **dadurch gekennzeichnet, dass** mit einer Wärmetauschereinheit (PHX1, SHX 1; PHX 2, SHX 2) zwei oder mehr seriell oder parallel geschaltete Welleneinrichtungen (ACM 1, ACM 2) in Verbindung stehen.

15. Klimatisierungssystem nach einem der Ansprüche 1 bis 14, **dadurch gekennzeichnet, dass** mit jeder der Welleneinrichtungen (ACM 1, ACM 2) ein Wasserabscheidesystem in Verbindung steht.

16. Klimatisierungssystem nach Anspruch 15, **dadurch gekennzeichnet, dass** das Wasserabscheidesystem aus Reheater (REH), Kondensor (CON) und Wasserabscheider (WE) besteht.

17. Klimatisierungssystem nach Anspruch 15 oder 16, **dadurch gekennzeichnet, dass** die Wasserabscheidesysteme, insbesondere Wasserabscheidekreisläufe strömungsmechanisch voneinander getrennt sind und eine mechanische Einheit bilden oder mechanisch getrennt angeordnet sind.

18. Klimatisierungssystem nach einem der Ansprüche 1 bis 17, **dadurch gekennzeichnet, dass** die gekühlte Luft über eine oder mehrere Leitungen in die Mischkammer oder in die Kabine geführt wird.

## Claims

1. Air-conditioning system, in particular for aircraft, with at least one heat exchanger, arranged in a ram-air duct, for the cooling of compressed air by means of fluid, and with at least one first (ACM 1) and second (ACM 2) shaft assembly which are connected to the heat exchanger on the compressed-air side, and also with ram-air outlet ducts separated fluidically from one another, **characterized in that** the heat exchanger comprises at least one first (PHX 1, SHX 1) and second (PHX 2, SHX 2) heat exchanger unit, of which in each case one is connected on the compressed-air side in each case to one of the shaft assemblies (ACM 1, ACM 2), and **in that** one of the ram-air outlet ducts is connected to the first heat exchanger unit (PHX 1, SHX 1) and one of the ram-air outlet ducts is connected to the second heat exchanger unit (PHX 2, SHX 2).

2. Air-conditioning system according to Claim 1, **characterized in that** the fluid is ambient air or ram air.

3. Air-conditioning system according to Claim 1 or 2, **characterized in that** the first (PHX 1, SHX 1) and second (PHX 2, SHX 2) heat exchanger units form a mechanical unit.

4. Air-conditioning system according to one of Claims 1 to 3, **characterized in that** each shaft assembly (ACM 1, ACM 2) consists of at least one turbine and of at least one compressor and/or of at least one blower.

5. Air-conditioning system according to one of Claims 1 to 4, **characterized in that a** blower (FAN 1, FAN 2) for the conveyance of ambient air or ram air through the heat exchanger is provided in each of the ram-air ducts.

6. Air-conditioning system according to one of Claims 1 to 5, c**haracterized in that** the divided ram-air outlet ducts are further subdivided in each case into a blower outlet duct and a blower bypass duct.

7. Air-conditioning system according to Claim 6, **characterized in that** a non-return valve (GCKV 1, GCKV 2) is provided in each of the bypass ducts, and/or **in that** one common or two separate ram-air duct outlet flaps (RAOA) are provided for closing the bypass ducts of the ram-air outlet ducts.

8. Air-conditioning system according to one of Claims 1 to 7, **characterized in that** the heat exchanger units (PHX 1, SHX 1, PHX 2, SHX 2) are separated fluidically from one another on the ram-air side and are acted upon by ambient air or ram air from a common ram-air duct.

9. Air-conditioning system according to one of Claims 1 to 8, **characterized in that** a ram-air duct inlet flap (RAIA) is provided.

10. Air-conditioning system according to one of Claims 1 to 9, **characterized in that** the heat exchanger comprises a primary and a secondary heat exchanger.

11. Air-conditioning system according to Claim 10, **characterized in that** the primary and the secondary heat exchangers (PHX 1, SHX 1; PHX 2, SHX 2) form a mechanical unit.

12. Air-conditioning system according to Claim 10 or 11, **characterized in that** the primary and the secondary heat exchanger are arranged on the ram-air side in series, in parallel or in such a way that ambient air or ram air flows through part of the primary heat exchanger in parallel to and through part of the latter in series with the secondary heat exchanger.

13. Air-conditioning system according to one of Claims 1 to 12, **characterized in that** the heat exchanger units (PHX 1, SHX 1; PHX 2, SHX 2) have their own compressed-air supply.

14. Air-conditioning system according to one of Claims 1 to 13, **characterized in that** two or more series-connected or parallel-connected shaft assemblies (ACM 1, ACM 2) are connected to a heat exchanger unit (PHX 1, SHX 1; PHX 2, SHX 2).

15. Air-conditioning system according to one of Claims 1 to 14, **characterized in that** a water separation system is connected to each of the shaft assemblies (ACM 1, ACM 2).

16. Air-conditioning system according to Claim 15, **characterized in that** the water separation system consists of a reheater (REH), condenser (CON) and water separator (WE).

17. Air-conditioning system according to Claim 15 or 16, **characterized in that** the water separation systems, in particular water separation circuits, are separated fluidically from one another and form a mechanical unit or are arranged mechanically separately.

18. Air-conditioning system according to one of Claims 1 to 17, **characterized in that** the cooled air is routed via one or more conduits into the mixing chamber or into the cabin.

## Revendications

1. Système de climatisation, notamment pour des avions, avec au moins un échangeur de chaleur disposé dans un canal d'air de refoulement pour refroidir l'air comprimé par un fluide, et avec au moins une première (ACM 1) et une deuxième installation d'arbre (ACM 2) qui sont en liaison avec l'échangeur de chaleur au côté de l'air comprimé, et avec des canaux d'évacuation d'air de refoulement séparés du point de vue de la mécanique d'écoulement l'un de l'autre, **caractérisé en ce que** l'échangeur de chaleur comprend au moins une première (PHX 1, SHX 1) et une deuxième unité d'échange thermique (PHX 2, SHX 2) dont respectivement une est en liaison, au côté de l'air comprimé, avec respectivement l'une des installations d'arbre (ACM 1, ACM 2), et **en ce que** l'un des canaux d'évacuation d'air de refoulement est en liaison avec la première unité d'échange thermique (PHX 1, SHX 1) et un avec la deuxième unité d'échange thermique (PHX 2, SHX 2).

2. Système de climatisation selon la revendication 1, **caractérisé en ce que** dans le cas du fluide, il s'agit d'air ambiant respectivement de refoulement.

3. Système de climatisation selon la revendication 1 ou 2, **caractérisé en ce que** la première (PHX 1, SHX 1) et la deuxième unité d'échange thermique (PHX 2, SHX 2) forment une unité mécanique.

4. Système de climatisation selon l'une des revendications 1 à 3, **caractérisé en ce que** chaque installation d'arbre (ACM 1, ACM 2) est constituée d'au moins une turbine et d'au moins un compresseur et/ou d'au moins une soufflerie.

5. Système de climatisation selon l'une des revendications 1 à 4, **caractérisé en ce qu'**il est prévu dans chacun des canaux d'air de refoulement une soufflerie (FAN 1, FAN 2) pour le convoyage de l'air ambiant respectivement de refoulement à travers l'échangeur de chaleur.

6. Système de climatisation selon l'une des revendications 1 à 5, **caractérisé en ce que** les canaux d'évacuation d'air de refoulement séparés sont subdivisés respectivement en un canal d'évacuation de soufflerie et un canal de dérivation de soufflerie.

7. Système de climatisation selon la revendication 6,
**caractérisé en ce qu'**il est prévu dans chacun des canaux de dérivation un clapet de non-retour (GCKV 1, GCKV 2) et/ou **en ce que** sont prévus un clapet commun ou deux clapets d'évacuation séparés du canal d'air de refoulement (RAOA) pour fermer les canaux de dérivation des canaux d'évacuation de l'air de refoulement.

8. Système de climatisation selon l'une des revendications 1 à 7, **caractérisé en ce que** les unités d'échange thermique (PHX 1, SHX 1, PHX 2, SHX 2) sont séparées du point de vue de la mécanique d'écoulement au côté de l'air de refoulement et sont chargées en air ambiant ou de refoulement à partir d'un canal d'air de refoulement commun.

9. Système de climatisation selon l'une des revendications 1 à 8, **caractérisé en ce qu'**il est prévu un clapet d'entrée (RAIA) du canal d'air de refoulement.

10. Système de climatisation selon l'une des revendications 1 à 9, **caractérisé en ce que** l'échangeur de chaleur comprend un échangeur de chaleur primaire et secondaire.

11. Système de climatisation selon la revendication 10, **caractérisé en ce que** l'échangeur de chaleur primaire et secondaire (PHX 1, SHX 1 ; PHX 2, SHX 2) forment une unité mécanique.

12. Système de climatisation selon la revendication 10 ou 11, **caractérisé en ce que** l'échangeur de chaleur primaire et secondaire sont disposés, côté air de refoulement, en série, parallèlement ou de façon qu'une partie de l'échangeur de chaleur primaire est traversée parallèlement et une partie sériellement vers l'échangeur de chaleur secondaire par l'air ambiant ou de refoulement.

13. Système de climatisation selon l'une des revendications 1 à 12, **caractérisé en ce que** les unités d'échange thermique (PHX 1, SHX 1 ; PHX 2, SHX 2) disposent d'une alimentation propre en air comprimé.

14. Système de climatisation selon l'une des revendications 1 à 13, **caractérisé en ce que** deux installations d'arbre ou plus (ACM 1, ACM 2) montées en série ou parallèlement sont en liaison avec une unité d'échange thermique (PHX 1, SHX 1 ; PHX 2, SHX 2).

15. Système de climatisation selon l'une des revendications 1 à 14, **caractérisé en ce qu'**un système de séparation d'eau est relié à chacune des installations d'arbre (ACM 1, ACM 2).

16. Système de climatisation selon la revendication 15, **caractérisé en ce que** le système de séparation d'eau est constitué d'un réchauffeur (REH), d'un condenseur (CON) et d'un séparateur d'eau (WE).

17. Système de climatisation selon la revendication 15 ou 16, **caractérisé en ce que** les systèmes de séparation d'eau, notamment les circuits de séparation d'eau, sont séparés du point de vue de la mécanique d'écoulement les uns des autres, et forment une unité mécanique ou sont séparés mécaniquement.

18. Système de climatisation selon l'une des revendications 1 à 17, **caractérisé en ce que** l'air refroidi est guidé par un ou plusieurs conduits dans la chambre de mélange ou dans la cabine.
